# EUROPÄISCHE PATENTANMELDUNG

(11) **EP 0 875 770 A1**
(43) Veröffentlichungstag der Anmeldung: **04.11.1998**
(21) Anmeldenummer: 98107420.6
(22) Anmeldetag: 23.04.1998
(51) Int. Cl.: G01S 7/481

(54) **Opto-electronische Sensoranordnung**

(30) Priorität: 29.04.1997 DE 19718157
(71) Anmelder: SICK AG, 79183 Waldkirch (DE)
(72) Erfinder: Stenkamp, Bernhard, Dr., 79106 Freiburg (DE); Ringwald, Siegfried, 79258 Harheim (DE)
(74) Vertreter: Finsterwald, Martin, Dr.

(57) **Zusammenfassung**

Die Erfindung betrifft eine opto-elektronische Sensoranordnung mit einem Lichtsender und einem Lichtempfänger,
bei dem der Sender gemeinsam mit einer ihm zugeordneten Sendeoptik und der Empfänger gemeinsam mit einer ihm zugeordneten Empfangsoptik auf einander gegenüberliegenden Seiten eines optisch undurchlässigen Sender und Empfänger und/oder Sende- und Empfangsoptik optisch voneinander trennenden Flächenelements, insbesondere einer Platine angeordnet sind, wobei Sende- und Empfangsoptik jeweils einen mit dem Flächenelement verbundenen, auf seiner Außenseite zumindest bereichsweise verspiegelten optischen Formkörper umfassen. Weiterhin betrifft die Erfindung eine opto-elektronische Sensoranordnung mit einem Lichtsender und einem Lichtempfänger, bei dem der Sender gemeinsam mit einer ihm zugeordneten Sendeoptik und/oder einem ihm zugeordneten Sendetubus und der Empfänger gemeinsam mit einer ihm zugeordneten Empfangsoptik und/oder einem ihm zugeordneten Empfangstubus voneinander beabstandet auf der gleichen Seite eines Flächenelements, insbesondere einer Platine angeordnet sind, wobei Sende- und Empfangsoptik bzw. Sendetubus und Empfangstubus durch optische Formkörper gebildet sind, die durch optisch dichte Kunststoffmasse optisch voneinander getrennt sind.

## Beschreibung

Die Erfindung betrifft eine opto-elektronische Sensoranordnung mit einem Lichtsender und einem Lichtempfänger.

Derartige Sensoranordnungen sind bekannt und weisen oftmals den Nachteil hoher Herstellungskosten auf. Weiterhin ist die Baugröße bekannter Sensoranordnungen oftmals nicht in ausreichendem Maße miniaturisierbar.

Eine Aufgabe der Erfindung besteht darin, eine optoelektronische Sensoranordnung der eingangs genannten Art derart weiterzuentwickeln, daß sich sowohl die Herstellungskosten als auch die Baugröße reduzieren lassen.

Gemäß einem ersten erfindungsgemäßen Lösungsansatz wird dies dadurch erreicht, daß der Sender gemeinsam mit einer ihm zugeordneten Sendeoptik und der Empfänger gemeinsam mit einer ihm zugeordneten Empfangsoptik auf einander gegenüberliegenden Seiten eines optisch undurchlässigen, Sender und Empfänger und/oder Sende- und Empfangsoptik optisch voneinander trennenden Flächenelements, insbesondere einer Platine angeordnet sind, wobei Sende- und Empfangsoptik jeweils einen mit dem Flächenelement verbundenen, auf seiner Außenseite zumindest bereichsweise verspiegelten optischen Formkörper umfassen.

Erfindungsgemäß kann also beispielsweise eine Platine, welche in üblicher Weise Leiterbahnen und elektronische Bauteile aufweist, zusätzlich als Trägerelement für Sender und Empfänger dienen, wobei die Platine gleichzeitig aufgrund ihrer optisch undurchlässigen Ausbildung dafür sorgt, daß Sender und Empfänger optisch voneinander getrennt werden, wenn Sie auf unterschiedlichen Seiten der Platine befestigt sind.

Weiterhin kann die Platine als Trägerelement für Sende- und Empfangsoptik dienen, wobei die Platine auch hier für eine optische Entkopplung von Sende- und Empfangsoptik sorgt, wenn die jeweiligen Optiken - ebenso wie Sender und Empfänger - auf einander gegenüberliegenden Seiten der Platine befestigt sind.

Sende- und Empfangsoptik umfassen erfindungsgemäß jeweils einen auf seiner Außenseite zumindest bereichsweise verspiegelten optischen Formkörper, der als einheitliches und kompaktes Bauteil auf der Platine benachbart zum Sender bzw. zum Empfänger befestigt werden kann. Die bereichsweise Verspiegelung des Formkörpers kann wahlweise für eine Strahlformung und/oder Umlenkung von Sende- bzw. Empfangsstrahl sorgen.

Die erfindungsgemäße Sensoranordnung kann somit auf einfachste Weise montiert werden, indem auf einer Platine Sender, Sendeoptik, Empfänger und Empfangsoptik befestigt werden. Die nach der genannten Montage zumindest im wesentlichen bereits funktionsfähige Sensoranordnung kann dann noch einem gehäusebildendem Prozeß unterworfen oder in ein vorgefertigtes Gehäuse eingebaut werden.

Dadurch, daß Sender, Empfänger, Sendeoptik und Empfangsoptik direkt auf einer Platine befestigt werden, läßt sich eine minimale Baugröße der Gesamt-Sensoranordnung erreichen.

Bevorzugt ist es, wenn die verspiegelte Fläche der Sende- und/oder Empfangsoptik zur Umlenkung eines Lichtstrahlbündels um ungefähr 90° ausgebildet ist, so daß letztlich Sende- und Empfangsstrahl parallel zum insbesondere als Platine ausgebildeten Flächenelement gerichtet sind.

Die verspiegelte Fläche der Sende- und/oder Empfangsoptik kann einen Hohlspiegel bilden, welcher insbesondere als Off-Axis-Paraboloid ausgeführt ist. Mit einem solchen Hohlspiegel kann eine Doppelfunktion des die Sende- und/oder Empfangsoptik bildenden Formkörpers erreicht werden, da sowohl eine Umlenkung eines Lichtstrahls als auch eine Strahlformung mittels eines Hohlspiegels realisierbar ist.

Alternativ ist es möglich, die verspiegelte Fläche der Sende- und/oder Empfangsoptik als Planspiegel auszubilden, wobei die verspiegelte Fläche in diesem Fall lediglich eine Umlenkfunktion erfüllt.

Die verspiegelte Fläche der Sende- und/oder Empfangsoptik kann - unabhängig davon, ob sie einen Hohlspiegel oder einen Planspiegel bildet - durch eine auf den jeweiligen optischen Formkörper aufgebrachte metallische Schicht realisiert sein. Sende- und/oder Empfangsoptik sind so besonders einfach herstellbar und als einheitliches, optisch bereits voll funktionsfähiges Modul am Flächenelement befestigbar.

Die Befestigung der optischen Formkörper am Flächenelement ist besonders einfach dann zu realisieren, wenn der optische Formkörper eine mit dem Flächenelement verbindbare Planfläche aufweist, über die der optische Formkörper und das Flächenelement miteinander verklebbar sind. Eine derartige Klebeverbindung kann sowohl mittels eines Klebstoff als auch mittels einer dünnen Klebefolie hergestellt werden.

Der optische Formkörper weist bevorzugt auf seiner dem Flächenelement zugewandten Seite eine Ausnehmung zur Aufnahme des Senders bzw. Empfängers auf, so daß Sender bzw. Empfänger durch den jeweiligen optischen Formkörper und das mit ihm verbundene Flächenelement zumindest weitgehend, insbesondere vollständig umschlossen sind.

Zwischen dem optischen Formkörper und dem Sender bzw. Empfänger kann ein Luftspalt ausgebildet sein. Alternativ ist es möglich, den optischen Formkörper mit dem Sender bzw. Empfänger optisch zu verkitten.

Eine besonders einfache Montage der Formkörper auf dem Flächenelement ist dadurch erreichbar, daß der optische Formkörper mit Positionierungsfortsätzen versehen wird, die mit in das Flächenelement eingebrachten Positionierbohrungen in Eingriff bringbar sind. Die genannten Positionierungsfortsätze können an den optischen Formkörper beispielsweise im Rahmen eines die optischen Formkörper schaffenden Spritzvorgangs angebracht werden, so daß sich hierdurch keinerlei Verteuerung des Herstellungsprozesses ergibt. Ebenso können die Positionierbohrungen des Flächenelements im Rahmen der Fertigung des beispielsweise als Platine ausgebildeten Flächenelements eingebracht werden, ohne die Herstellungskosten zu erhöhen, da eine Platine ohnehin mit einer Vielzahl von Bohrungen zu versehen ist.

Von Vorteil ist es, wenn die Positionierungsfortsätze mit Klemmsitz in den Positionierbohrungen fixierbar sind und auf diese Weise die erforderliche Verbindung zwischen optischem Formkörper und Flächenelement bewirken. Eine Verklebung zwischen optischem Formkörper und Flächenelement ist in diesem Fall nicht mehr nötig und kann demzufolge auf wirtschaftlich vorteilhafte Weise eingespart werden. Allerdings ist es in letztgenanntem Fall sinnvoll, zwischen optischem Formkörper und Flächenelement ein Dichtungsmaterial vorzusehen, welches beispielsweise während des gehäusebildenden Prozesses verhindert, daß Gehäusematerial in den Bereich von Lichtsender bzw. Lichtempfänger gelangt. Eine besonders gute Abdichtung wird dann erreicht, wenn das Dichtungsmaterial zwischen optischem Formkörper und Flächenelement zusammengedrückt wird, wobei die hierfür erforderlichen Kräfte durch den Klemmsitz zwischen Positionierbohrungen und Positionierungsfortsätzen erzeugbar sind.

Der die Sende- und Empfangsoptik bildende optische Formkörper kann eine Linse umfassen, deren optische Achse zumindest im wesentlichen senkrecht zum Flächenelement verläuft. Alternativ oder zusätzlich kann eine solche Linse vorgesehen werden, deren optische Achse zumindest im wesentlichen parallel zum Flächenelement verläuft.

Jeder optische Formkörper kann somit mit einer oder mit zwei Linsen ausgestattet werden, wobei bei Ausstattung mit nur einer Linse deren optische Achse entweder senkrecht oder parallel zum Flächenelement verläuft. Bei Ausstattung des optischen Formkörpers mit zwei Linsen verlaufen deren optische Achsen im wesentlichen senkrecht zueinander, wobei eine optische Achse im wesentlichen senkrecht und die andere optische Achse im wesentlichen parallel zum Flächenelement verläuft.

Durch die Vorsehung der genannten Linsen kann eine jeweils gewünschte Strahlformung von Sende- und/oder Empfangsstrahl erreicht werden, wobei von Vorteil ist, daß die jeweilige Linse bzw. die jeweiligen Linsen fest in den optischen Formkörper eingebracht sind und mit ihm gemeinsam somit eine kompakt handhabbare Einheit bilden.

Die genannten Linsen können mit den bereits erwähnten verspiegelten Bereichen der optischen Formkörper derart zusammenwirken, daß sowohl eine Strahlformung als auch eine Strahlumlenkung realisierbar wird.

Besonders bevorzugt ist es, wenn das Flächenelement sowie die Sende- und Empfangsoptik einer erfindungsgemäßen Sensoranordnung mit einer gehäusebildenden Masse umhüllt sind. Die Umhüllung kann beispielsweise durch einen Spritz-, Gieß- oder Preßvorgang, oder aber auch durch beliebige andere gehäusebildende Verfahren erzeugt werden. Bei einer derartigen bevorzugten Ausführungsform der Erfindung läßt sich der Herstellungsprozeß auf einfachste Weise beispielsweise durch einen einzigen Spritzvorgang komplettieren. Neben dem einfachen und kostengünstigen Herstellungsverfahren ist in diesem Fall von Vorteil, daß auch eine besonders kleine Bauform der fertigen Sensoranordnung erzielbar ist, da das Umhüllen bzw. das Umspritzen beispielsweise in der Weise stattfinden kann, daß der äußere Umfang der Gesamtanordnung lediglich so groß ist wie der äußere Umfang der beiden auf eine Platine aufgesetzten optischen Formkörper.

Bei der vorstehend genannten bevorzugten Ausführungsform der Erfindung ist es weiterhin vorteilhaft, wenn der optische Formkörper bzw. die optischen Formkörper aus einem hochtemperaturbeständigen Werkstoff bestehen. Bei Verwendung temperaturbeständiger Materialien ist sichergestellt, daß die optischen Formkörper durch den gehäusebildenden Umhüllungsvorgang in keiner Weise beeinflußt bzw. verändert werden, da der Schmelzpunkt des für die optischen Formkörper verwendeten Werkstoffs oberhalb der Verarbeitungstemperatur liegt.

In bestimmten Anwendungsfällen, beispielsweise bei der Herstellung von Rundlichtschranken kann der gehäusebildende Umhüllungsvorgang so ausgeführt werden, daß die gehäusebildende Masse letztlich eine zumindest im wesentlichen zylindrische Form aufweist.
Dabei ist es von Vorteil, wenn die optischen Formkörper jeweils eine im wesentlichen halbkreisförmige, sich senkrecht zum Flächenelement erstreckende Abschlußfläche aufweisen, die gemeinsam eine im wesentlichen kreisrunde Stirnseite der Sensoranordnung bilden. Durch diese Stirnseite der zumindest im wesentlichen zylindrischen Sensoranordnung tritt dann jeweils über die optischen Formkörper Licht in die Sensoranordnung ein und aus. Der Umfang der kreisrunden Stirnseite, welche durch die beiden Formkörper gebildet ist, entspricht dabei dem Umfang der zylindrischen Gesamt-Sensoranordnung.

Gemäß einem zweiten erfindungsgemäßen Lösungsansatz wird eine opto-elektronische Sensoranordnung der eingangs genannten Art derart weitergebildet, daß der Sender gemeinsam mit einer ihm zugeordneten Sendeoptik und/oder einem ihm zugeordnetem Sendetubus und der Empfänger gemeinsam mit einer ihm zugeordneten Empfangsoptik und/oder einem ihm zugeordneten Empfangstubus voneinander beabstandet auf der gleichen Seite eines Flächenelements, insbesondere einer Platine angeordnet sind, wobei Sende- und Empfangsoptik bzw. Sendetubus und Empfangstubus durch optische Formkörper gebildet sind, die durch optisch dichte Kunststoffmasse optisch voneinander getrennt sind.

Auch bei dieser Ausführungsform der Erfindung läßt sich eine besonders kompakte Bauweise der Sensoranordnung bei niedrigen Herstellungskosten erreichen.

Im Unterschied zum ersten erfindungsgemäßen Lösungsansatz werden Sender und Empfänger auf der gleichen Seite eines Flächenelements angeordnet, wobei eine optische Trennung der Sende- und Empfangsbereiche durch eine optisch dichte Kunststoffmasse erreicht wird, die insbesondere gleichzeitig sicherstellt, daß Sende- und Empfangstubus bzw. Sende- und Empfangsoptik unverrückbar zueinander positioniert sind. Das Einbringen der Kunststoffmasse kann beispielsweise durch einen Spritz-, Gieß- oder Preßvorgang, oder aber auch durch beliebige andere gehäusebildende Verfahren bewerkstelligt werden.

Bei der Ausführungsform gemäß des zweiten Lösungsansatzes ist von Vorteil, daß keine Strahlumlenkung erfolgen muß, so daß die Vorsehung von verspiegelten Bereichen eingespart wird. Sende- und Empfangslichtstrahl verlaufen gemäß des zweiten Lösungsansatzes zumindest im wesentlichen senkrecht zum Flächenelement, welches Sender und Empfänger trägt.

Bevorzugt können Sende- und Empfangstubus und/oder Sende- und Empfangsoptik als optische Formkörper ausgebildet werden, die aus hochtemperaturbeständigem Werkstoff bestehen, wobei der Schmelzpunkt des Werkstoffs insbesondere oberhalb 200°C liegt. Als Werkstoff bietet sich auch hier die Verwendung von Apec an.

Weiterhin ist es von Vorteil, wenn die Kunststoffmasse, die den Sendebereich optisch vom Empfangsbereich trennt, aus duroplastischem Werkstoff besteht, der insbesondere bei einer vergleichsweise niedrigen Temperatur verarbeitbar ist. Hierdurch werden die in Verbindung mit dem ersten Lösungsansatz bereits erläuterten Vorteile erreicht.

Das Flächenelement, der Sender, der Empfänger, der Sendetubus und der Empfangstubus können insgesamt mit der genannten, optisch dichten Kunststoffmasse umhüllt werden, so daß die Kunststoffmasse letztlich das Gehäuse der Gesamt-Sensoranordnung bildet. Neben der Bildung eines Gehäuses wird so auf vorteilhafte Weise erreicht, daß alle wesentlichen Bestandteile der Sensoranordnung fest und unverrückbar zueinander positioniert sind.

Falls die Sende- bzw. Empfangsoptik nicht in den Sende- bzw. Empfangstubus integriert ist, ist es möglich, die Sende- bzw. Empfangsoptik auf den Sende- bzw. Empfangstubus aufzusetzen. Dieser Aufsetzvorgang kann stattfinden, nachdem die die optische Trennung von Sende- und Empfangstubus bewirkende Kunststoffmasse eingebracht wurde.

Alternativ zu dem vorstehend beschriebenen nachträglichen Aufsetzvorgang kann Sendetubus und Sendeoptik zu einem einheitlichen optischen Formkörper zusammengefaßt werden, so daß das nachträgliche Aufsetzen entfällt. Entsprechend kann mit Empfangstubus und Empfangsoptik vorgegangen werden.

Gemäß einem dritten erfindungsgemäßen Lösungsansatz wird eine opto-elektronische Sensoranordnung der eingangs genannten Art derart weitergebildet, daß der Sender, eine ihm zugeordnete Sendeoptik, der Empfänger sowie eine ihm zugeordnete Empfangsoptik auf einem im wesentlichen optisch undurchlässigen Flächenelement, insbesondere einer Platine angeordnet sind, wobei Sende- und Empfangsoptik jeweils einen mit dem Flächenelement verbundenen, auf seiner Außenseite zumindest bereichsweise verspiegelten optischen Formkörper umfassen, und wobei Sender und Sendeoptik auf einander gegenüberliegenden Seiten des zwischen Sender und Sendeoptik optisch durchlässigen Flächenelements angeordnet sind, und/oder wobei Empfänger und Empfangsoptik auf einander gegenüberliegenden Seiten des zwischen Empfänger und Empfangsoptik optisch durchlässigen Flächenelements angeordnet sind.

Der Unterschied zum ersten Lösungsansatz besteht darin, daß Sender und Sendeoptik und/oder Empfänger und Empfangsoptik auf einander gegenüberliegenden Seiten des Flächenelements angeordnet sein können, wobei das Flächenelement zwischen Sender und Sendeoptik bzw. zwischen Empfänger und Empfangsoptik einen optisch durchlässigen Bereich aufweist, welcher beispielsweise als Durchbrechung einer Platine ausgebildet sein kann. Dieser optisch durchlässige Bereich gewährleistet, daß Licht vom Sender zur Sendeoptik bzw. von der Empfangsoptik zum Empfänger gelangen kann.

Sende- und Empfangsoptik sind weiterhin auf einander gegenüberliegenden Seiten des Flächenelements vorgesehen.

Besonders bevorzugt bei einer Anordnung gemäß der dritten Lösungsvariante ist es, wenn Sender und/oder Empfänger mittels Flip-Chip-Technik mit elektrischen Leiterbahnen des Flächenelements bzw. der Platine verbunden sind. Eine derartige Verbindung sowie auch die erwähnten optisch durchlässigen Bereiche des Flächenelements sind in der deutschen Patentanmeldung 196 43 911.6 der Anmelderin beschrieben.

Gemäß einer weiteren erfindungsgemäßen Lösungsvariante werden Sender und Empfänger auf der gleichen oder auf gegenüberliegenden Seiten eines Flächenelements, insbesondere einer Platine angeordnet und jeweils mit einem Faseroptikanschluß ausgestattet. Dieser Faseroptikanschluß ist entweder aus Metall oder einem temperaturbeständigen Kunststoff gefertigt. Die Gesamtanordnung aus Flächelement, Sender, Empfänger sowie Faseroptikanschlüssen kann dann mit einer gehäusebildenden Masse umhüllt werden.

Weitere bevorzugte Ausführungsformen sind in den Unteransprüchen angegeben.

Die Erfindung wird nachfolgend anhand von Ausführungsbeispielen unter Bezugnahme auf die Zeichnungen beschrieben; in diesen zeigt:
- Fig. 1a: eine schematische, aufgebrochene Seitenansicht des vorderen Bereichs einer erfindungsgemäßen Sensoranordnung gemäß der ersten Lösungsvariante,
- Fig. 1b: eine Ansicht der Stirnseite einer Sensoranordnung gemäß Fig. 1a,
- Fig. 2: eine teilweise geschnittene Seitenansicht einer Sensor-Gesamtanordnung gemäß der ersten Lösungsvariante,
- Fig. 3a: eine Ansicht der Unterseite eines im Rahmen der ersten Lösungsvariante einsetzbaren optischen Formkörpers,
- Fig. 3b: eine Seitenansicht eines Formkörpers gemäß Fig. 3a,
- Fig. 3c: eine perspektivische Ansicht eines optischen Formkörpers gemäß den Figuren 3a und 3b,
- Fig. 4: den schematischen Aufbau einer erfindungsgemäßen Sensoranordnung gemäß der zweiten Lösungsvariante, und
- Fig. 5: eine schematische, aufgebrochene Seitenansicht des vorderen Bereichs einer erfindungsgemäßen Sensoranordnung gemaß der dritten Lösungsvariante.

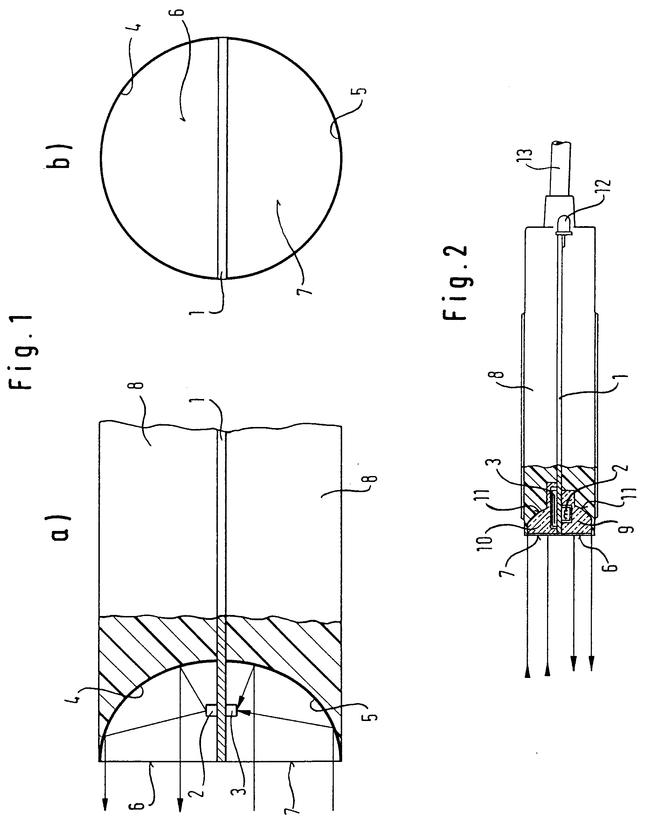

Die schematische Darstellung einer Sensoranordnung entsprechend der ersten Lösungsvariante gemäß Fig. 1a zeigt eine Platine 1, auf deren Oberseite ein Sender 2 und auf deren Unterseite ein Empfänger 3 angeordnet sind. Sender 2 und Empfänger 3 sind dabei auf der Ober- und Unterseite der Platine 1 auf einander entsprechenden Bereichen angeordnet, so daß sie sich direkt gegenüberliegen.

Oberhalb des Senders 2 ist eine mit der Platine 1 fest verbundene Hohlspiegelanordnung 4 vorgesehen, welche die Sendeoptik bildet.

In entsprechender Weise ist unterhalb des Empfängers 3 eine Hohlspiegelanordnung 5 vorgesehen, die die Empfangsoptik bildet.

Die beiden Hohlspiegel 4, 5 sind dabei in der dargestellten Ausführungsform als Off-Axis-Parabolide ausgebildet, so daß sie sowohl eine Strahlformung als auch eine Umlenkung der jeweiligen Strahlen bewirken. Der Strahlverlauf ist aus den in Fig. 1a eingezeichneten Pfeilen ersichtlich.

Der Hohlspiegel 4 lenkt das vom Sender 2 ausgestrahlte Lichtbündel derart um, daß es die Sensoranordnung im wesentlichen parallel zur Oberfläche der Platine 1 in Pfeilrichtung durch die Lichtaustrittsfläche 6 verläßt.

Der Hohlspiegel 5 ist derart ausgebildet, daß er parallel zur Oberfläche der Platine 1 einfallendes Licht auf die lichtempfindliche Fläche des Empfängers 3 lenkt, wobei sich die lichtempfindliche Fläche des Empfängers 3 zumindest im wesentlichen parallel zur Unterseite der Platine 1 erstreckt, auf der der Empfänger 3 befestigt ist. Das vom Hohlspiegel 5 zum Empfänger 3 geleitete Licht tritt durch die Lichteintrittsfläche 7 in die Sensoranordnung ein.

Die Hohlspiegel 4, 5 sowie die Platine 1 sind in eine gehäusebildende Masse 8 eingebettet, mit der die genannten Komponenten nach Zusammenfügen der Bauteile 1 bis 5 umhüllt bzw. umspritzt wurden.

Durch das genannte gehäusebildende Verfahren, welches insbesondere als Spritzverfahren ausgeführt wird, kann die erfindungsgemäße Sensoranordnung durch Auswahl geeigneter Spritzformen ohne Schwierigkeiten hinsichtlich ihrer äußeren Gehäuseform an unterschiedliche Anwendungsfälle angepaßt werden.

Die gehäusebildende Masse 8 bildet somit - mit Ausnahme der Lichteintrittsfläche 7 und der Lichtaustrittsfläche 6 - die äußere Oberfläche der erfindungsgemäßen Sensoranordnung und stellt gleichzeitig eine Fixierung der Hohlspiegel 4, 5 an der Platine 1 sicher. Zudem umgibt die gehäusebildende Masse 8 auch auf der Platine 1 angeordnete, aus Gründen der Übersichtlichkeit nicht dargestellte elektronische Komponenten.

Die in Fig. 1a dargestellte Ausführungsform der erfindungsgemäßen Sensoranordnung weist ein im wesentlichen zylindrisches Gehäuse auf, was insbesondere durch Fig. 1b verdeutlicht wird, die eine Ansicht derjenigen Stirnseite der Sensoranordnung gemäß Fig. 1a zeigt, die Lichtaustrittsfläche 6 und Lichteintrittsfläche 7 aufweist.

Fig. 1b zeigt, daß sowohl Lichtaustrittsfläche 6 als auch Lichteintrittsfläche 7 jeweils Halbkreisform aufweisen. Zwischen Lichtaustrittsfläche 6 und Lichteintrittsfläche 7 befindet sich die Platine 1.

Aus Fig. 1b ist weiterhin ersichtlich, daß die äußere Kontur der beiden Hohlspiegel 4, 5 in Lichteintrittsrichtung betrachtet jeweils ein Halbkreiskontur aufweisen, die der Lichtaustrittsfläche 6 bzw. der Lichteintrittsfläche 7 entspricht.

Bei der dargestellten erfindungsgemäßen Sensoranordnung ist von Vorteil, daß der Außenumfang des zylindrischen Gehäuses genauso klein sein kann, wie der Außenumfang der in Fig. 1b dargestellten Komponenten 1, 4 und 5.

Fig. 2 zeigt ein Ausführungsbeispiel einer erfindungsgemäßen Sensoranordnung, welche nach dem in Fig. 1 dargestellten Prinzip arbeitet.

Entsprechend Fig. 1a ist auf einer Platine 1 ein Sender 2 sowie ein Empfänger 3 angeordnet, wobei sich Sender 2 und Empfänger 3 auf unterschiedlichen Seiten der Platine 1 gegenüberliegen.

Der Sender 2 ist von einem optischen Formkörper 9 umgeben, welcher ebenfalls auf der Platine 1 befestigt ist.

In analoger Weise ist der Empfänger 3 von einem weiteren optischen Formkörper 10 umgeben, welcher mit der Oberseite der Platine 1 verbunden ist, auf der auch der Empfänger 3 angeordnet ist.

Die beiden Formkörper 9, 10 bestehen jeweils aus optisch durchlässigem Material und sind in den Bereichen 11 verspiegelt, so daß sie letztlich die Umlenkung eines Lichtstrahlbündels bewirken können Der verspiegelte Bereich 11 des Formkörpers 10 bewirkt eine Umlenkung von empfangenen Licht auf den Empfänger 3. Der verspiegelte Bereich 11 des Formkörpers 9 bewirkt eine Umlenkung des vom Sender 2 ausgesandten Lichts in Pfeilrichtung parallel zur Oberfläche der Platine 1.

Die beiden Formkörper 9, 10 sind jeweils so ausgebildet, daß sie gemeinsam mit der ihnen jeweils zugewandten Oberfläche der Platine 1 den Sender 2 bzw. den Empfänger 3 vollständig umschließen.

An dem der Lichtaustrittsfläche 6 und der Lichteintrittsfläche 7 abgewandten Ende der Platine 1 ist eine Diode 12 vorgesehen, mittels welcher der Betriebs- oder Schaltzustand der Sensoranordnung angezeigt werden kann.

Im Bereich der Diode 12 ist weiterhin ein Anschlußkabel 13 vorgesehen, über welches die Sensoranordnung sowohl mit Betriebsspannung als auch mit Steuersignalen gespeist werden kann und über welches die Sensoranordnung Signale zum Zweck der weiteren Auswertung zur Verfügung stellen kann.

Die gesamte Elektronik der dargestellten Sensoranordnung ist auf denjenigen Bereich in der Platine 1 angeordnet, die nicht von den Formkörpern 9 und 10 überdeckt ist.

Die Formkörper 9, 10 sowie die Platine 1 mit den darauf befindlichen elektronischen Bauteilen sind von gehäusebildender Masse 8 umgeben, die ihre dargestellte Form beispielsweise im Rahmen eines Spritzvorgangs erhalten hat.

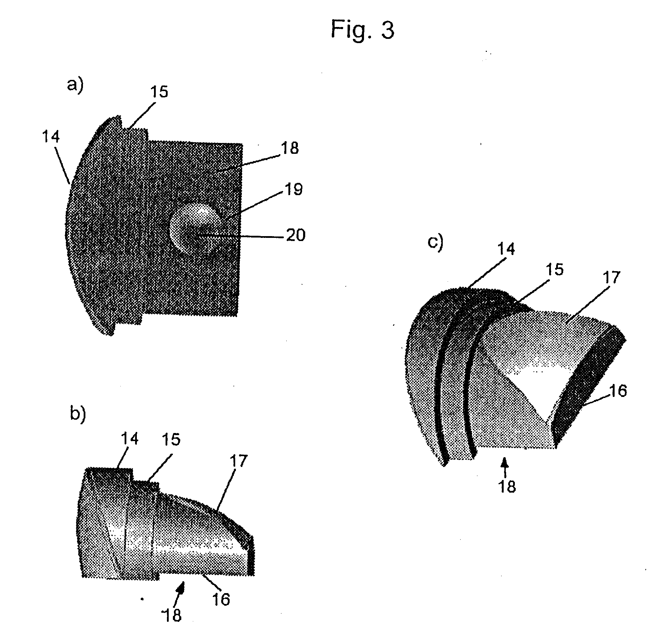

Die Figuren 3a bis 3c zeigen verschiedene Ansichten eines optischen Formkörpers, der in Sensoranordnungen gemäß den Figuren 1 und 2 Verwendung finden kann.

Der in Fig. 3 dargestellte Formkörper setzt sich zusammen aus zwei aneinander angrenzenden, im wesentlichen Halbzylinderform aufweisenden Bereichen 14, 15, wobei der Bereich 14 einen größeren Durchmesser aufweist als der Bereich 15.

An die dem halbzylindrischen Bereich 14 abgewandte Seite des halbzylindrischen Bereichs 15 schließt sich ein weiterer Bereich 16 an, dessen Oberfläche zum Teil von einem gewölbten, verspiegelten Bereich 17 gebildet wird. Die Form und Position des verspiegelten Bereichs 17 ist dabei derart gewählt, daß mit dem optischen Formkörper gemäß Fig. 3 eine Strahlumlenkung und Strahlformung erreicht werden kann, wie sie in Zusammenhang mit Fig. 1a unter Bezugnahme auf die beiden Hohlspiegel 4, 5 bereits erläutert wurde.

Der in Fig. 3 dargestellte Formkörper ist mit seiner Unterseite 18 auf einer Platine insbesondere flächig befestigbar.

Auf der Unterseite 18 des Bereichs 16 ist eine Aussparung 19 vorgesehen, welche zur Aufnahme eines Senders bzw. eines Empfängers dient.

An dem dem verspiegelten Bereich 17 zugewandten Ende der Aussparung 19 ist eine Linse 20 vorgesehen, welche zur Strahlformung eines auf einen Empfänger gelangenden oder von einem Sender herrührenden Strahlbündels dient.

Weiterhin ist der halbzylindrische Bereich 14 als Linse ausgebildet, die ebenfalls zur Strahlformung dient.

Das in Fig. 3 dargestellte Ausführungsbeispiel eines Formkörpers weist folglich zwei Linsen 14, 20 auf, wobei die optische Achse der Linse 14 parallel zur Unterseite 18 des Formkörpers bzw. zur Platine verläuft, während die optischen Achse der Linse 20 senkrecht zur Unterseite 18 des Formkörpers bzw. zur Platine verläuft.

Der verspiegelte Bereich 17 des Bereichs 16 bewirkt eine Strahlumlenkung um im wesentlichen 90°C, so daß ein Strahlverlauf gemäß den Figuren 1a und 2 erhalten werden kann.

Da der verspiegelte Bereich 17 gemäß Fig. 3 gewölbt ausgeführt ist, bewirkt er zudem auch noch eine Strahlformung.

In einer alternativen Ausführungsform eines optischen Formkörpers wäre es ebenso möglich, den verspiegelten Bereich 17 als Planfläche auszubilden, so daß er ausschließlich eine Umlenkung eines Lichtstrahlbündels bewirkt. In diesem Fall könnte die benötigte Strahlformung ausschließlich durch die Linsen 14, 20 vorgenommen werden.

Schließlich sind auch Ausführungsformen denkbar, bei denen lediglich eine der beiden Linsen 14 oder 20 vorgesehen wird, wobei in all diesen Fällen der verspiegelte Bereich 17 sowohl gewölbt als auch plan ausgeführt werden kann. Gleiches gilt, wenn in einer weiteren Ausführungsform keine der beiden Linsen 14 und 20 vorgesehen ist.

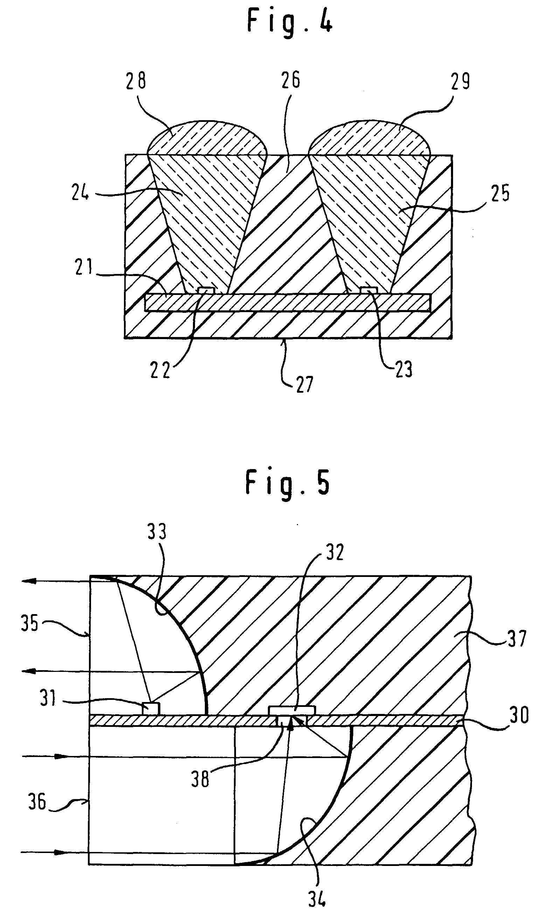

Fig. 4 zeigt eine schematische Darstellung eines erfindungsgemäßen Sensors gemäß dem zweiten Lösungsansatz.

Hier sind auf der gleichen Seite einer Platine 21 sowohl ein Sender 22 als auch ein Empfänger 23 mit Abstand voneinander angeordnet.

Oberhalb des Senders 22 ist ein Sendetubus 24 vorgesehen. Analog ist oberhalb des Empfängers 23 ein Empfangstubus 25 angeordnet.

Sowohl Sendetubus 24 als auch Empfangstubus 25 sind mit der Platine 21 verbunden und weisen jeweils eine konische Form auf, wobei sich der Querschnitt von Sendetubus 24 und Empfangstubus 25 mit zunehmenden Abstand von der Platine 21 vergrößert.

Sendetubus 24 und Empfangstubus 25 bestehen jeweils aus einem hitzebeständigem optischen Formkörper.

Platine 21, Sendetubus 24 und Empfangstubus 25 sind in einer optisch dichten, gehäusebildenden Kunststoffmasse 26 eingebettet, deren äußere Oberfläche 27 die Oberfläche der Gesamt-Sensoranordnung bzw. die Oberfläche des Gehäuses der Sensoranordnung bildet.

Die gehäusebildende Kunststoffmasse 26 trennt Sendetubus 24 und Empfangstubus 25 optisch voneinander und bewirkt zudem, daß Platine 21, Sendetubus 24 und Empfangstubus 25 fest und unverrückbar zueinander positioniert sind.

An die obere Lichtaustrittsfläche des Sendetubus 24 schließt sich ein Linsenaufsatz 28 an, welcher die Sendeoptik bildet.

In analoger Weise schließt sich an die obere Lichteintrittsfläche des Empfangstubus 25 ein Linsenaufsatz 29 an, welcher als Empfangsoptik wirkt.

Die beiden Linsenaufsätze 28, 29 können nach dem Einbringen der Kunststoffmasse 26 auf den Sendetubus 24 bzw. den Empfangstubus 25 aufgesetzt werden.

In einer alternativen Ausführungsform der Erfindung ist es auch möglich, Sendetubus 24 und Linsenaufsatz 28 bzw. Empfangstubus 25 und Linsenaufsatz 29 jeweils als einheitlichen optischen Formkörper auszubilden, wobei es insbesondere auch möglich ist, die Linsenbereiche dieser Formkörper zumindest bereichsweise mit Kunststoffmasse 26 zu umgeben.

Die schematische Darstellung einer Sensoranordnung entsprechend der dritten Lösungsvariante gemäß Fig. 5 zeigt eine Platine 30, auf deren Oberseite ein Sender 31 angeordnet ist, oberhalb dessen eine mit der Platine 30 fest verbundene Hohlspiegelanordnung 33 vorgesehen ist, welche die Sendeoptik bildet.

Auf der gleichen Seite, auf der der Sender 31 mit der Platine 30 verbunden ist, ist auch ein Empfänger 32 an einer vom Sender 31 beabstandeten Position mit der Platine 30 verbunden.

Im Bereich der lichtempfindlichen Fläche des Empfängers 32 ist die Platine 30 mit einer Durchbrechung 38 versehen, so daß das Licht von der dem Empfänger 32 gegenüberliegenden Seite der Platine 30 zur lichtempfindlichen Fläche des Empfängers 32 gelangen kann.

Unterhalb der Durchbrechung 38 ist eine Hohlspiegelanordnung 34 vorgesehen, die die Empfangsoptik bildet.

Die beiden Hohlspiegel 33, 34 sind dabei so ausgebildet, daß sie sowohl eine Strahlformung als auch eine Umlenkung der jeweiligen Strahlen bewirken. Der Strahlverlauf ist aus den in Fig. 5 eingezeichneten Pfeilen ersichtlich.

Der Hohlspiegel 33 lenkt das vom Sender 31 ausgestrahlte Lichtbündel derart um, daß es die Sensoranordnung im wesentlichen parallel zur Oberfläche der Platine 30 in Pfeilrichtung durch die Lichtaustrittsfläche 35 verläßt.

Der Hohlspiegel 34 ist derart ausgebildet, daß er parallel zur Oberfläche der Platine 30 einfallendes Licht auf die lichtempfindliche Fläche des Empfängers 32 lenkt, wobei das Licht hierbei durch die Durchbrechung 38 tritt. Die lichtempfindliche Fläche des Empfängers 32 erstreckt sich zumindest im wesentlichen parallel zur Oberseite der Platine 30 und ist dieser zugewandt. Das vom Hohlspiegel 34 zum Empfänger 32 geleitete Licht tritt durch die Lichteintrittsfläche 36 in die Sensoranordnung ein.

Die Hohlspiegel 33, 34 sowie die Platine 30 sind in eine gehäusebildende Masse 37 eingebettet, mit der die genannten Komponenten nach Zusammenfügen der Bauteile 30 - 34 umhüllt wurden. Die Umhüllung dieser Bauteile findet im Rahmen eines gehäusebildenden Verfahrens statt. Zur Anwendung können hier beispielsweise Spritz-, Gieß- oder Preßverfahren kommen.

Durch das genannte gehäusebildende Verfahren kann die erfindungsgemäße Sensoranordnung beispielsweise durch Auswahl geeigneter Spritz- oder Gießformen ohne Schwierigkeiten hinsichtlich ihrer äußeren Gehäuseform an unterschiedliche Anwendungsfälle angepaßt werden.

Die gehäusebildende Masse 37 bildet somit - mit Ausnahme der Lichteintrittsfläche 36 und der Lichtaustrittsfläche 35 - die äußerer Oberfläche der erfindungsgemäßen Sensoranordnung und stellt gleichzeitig eine Fixierung der Hohlspiegel 33, 34 an der Platine 30 sicher. Zudem umgibt die gehäusebildende Masse 37 auch auf der Platine 30 angeordnete, aus Gründen der Übersichtlichkeit nicht dargestellte elektrische Komponenten.

## Patentansprüche

1. Opto-elektronische Sensoranordnung mit einem Lichtsender (2) und einem Lichtempfänger (3),
dadurch **gekennzeichnet,**
daß der Sender (2) gemeinsam mit einer ihm zugeordneten Sendeoptik (4, 9) und der Empfänger (3) gemeinsam mit einer ihm zugeordneten Empfangsoptik (5, 10) auf einander gegenüberliegenden Seiten eines optisch undurchlässigen, Sender (2) und Empfänger (3) und/oder Sende- und Empfangsoptik (4, 9; 5, 10) optisch voneinander trennenden Flächenelements (1), insbesondere einer Platine angeordnet sind, wobei Sende- und Empfangsoptik (4, 9; 5, 10) jeweils einen mit dem Flächenelement (1) verbundenen, auf seiner Außenseite zumindest bereichsweise verspiegelten optischen Formkörper (4, 9; 5, 10) umfassen.

2. Opto-elektronische Sensoranordnung nach Anspruch 1,
dadurch **gekennzeichnet,**
daß die verspiegelte Fläche der Sende- und/oder Empfangsoptik (4, 9; 5, 10) zur Umlenkung eines Lichtstrahlbündels um ungefähr 90°C ausgebildet ist, und/oder daß die verspiegelte Fläche der Sende- und/oder Empfangsoptik (4, 9; 5, 10) einen Hohlspiegel (4, 5, 17) oder einen Planspiegel bildet, wobei insbesondere der Hohlspiegel (4, 5, 17) als Off-Axis-Spiegel, vorzugsweise als Off-Axis-Paraboloid ausgebildet ist.

3. Opto-elektronische Sensoranordnung nach einem der vorhergehenden Ansprüche,
dadurch **gekennzeichnet,**
daß die verspiegelte Fläche (4, 5, 17) der Sende- und/oder Empfangsoptik (4, 9; 5, 10) durch eine auf den optischen Formkörper (4, 9; 5, 10) aufgebrachte spiegelnde, insbesondere metallische Schicht gebildet ist, und/oder daß Sende- und Empfangsstrahl parallel zum Flächenelement (1) gerichtet sind, und/oder daß der optische Formkörper (4, 9; 5, 10) eine mit dem Flächenelement (1) verbundene Planfläche aufweist, wobei insbesondere der optische Formkörper (4, 9; 5, 10) und das Flächenelement (1) im Bereich der Planfläche miteinander verklebt sind.

4. Opto-elektronische Sensoranordnung nach einem der vorhergehenden Ansprüche,
dadurch **gekennzeichnet,**
daß der optische Formkörper (9, 10) auf seiner dem Flächenelement (1) zugewandten Seite eine Ausnehmung (19) zur Aufnahme des Senders (2) bzw. des Empfängers (3) aufweist, und/oder daß zwischen dem optischen Formkörper (9, 10) und dem Sender (2) bzw. Empfänger (3) ein Luftspalt ausgebildet ist, oder daß der optische Formkörper (9, 10) mit dem Sender (2) bzw. mit dem Empfänger (3) optisch verkittet ist.

5. Opto-elektronische Sensoranordnung nach einem der vorhergehenden Ansprüche,
dadurch **gekennzeichnet,**
daß der optische Formkörper mit in das Flächenelement eingebrachten Positionierbohrungen in Eingriff bringbaren Positionierungsfortsätzen versehen ist, wobei insbesondere die Positionierungsfortsätze mit Klemmsitz in den Positionierbohrungen fixierbar sind und zwischen optischem Formkörper und Flächenelement ein Dichtungsmaterial eingebracht ist, und/oder daß der optische Formkörper eine Linse (20) umfaßt, deren optische Achse zumindest im wesentlichen senkrecht zum Flächenelement verläuft, und/oder daß der optische Formkörper eine Linse (14) umfaßt, deren optische Achse zumindest im wesentlichen parallel zum Flächenelement verläuft, und/oder daß Flächenelement (1) sowie Sende- und Empfangsoptik (4, 9; 5, 10) mit einer gehäusebildenden Masse (8) umhüllt sind, und/oder daß der optische Formkörper (4, 9; 5, 10) aus einem hochtemperaturbeständigem Werkstoff besteht.

6. Opto-elektronische Sensoranordnung nach einem der vorhergehenden Ansprüche,
dadurch **gekennzeichnet,**
daß die gehäusebildende Masse (8) aus duroplastischem Werkstoff besteht, der insbesondere bei einer Temperatur unterhalb des Schmelzpunktes des für den optischen Formkörper (4, 9; 5, 10) verwendeten Werkstoffs verarbeitbar ist, und/oder daß die gehäusebildende Masse (8) eine zumindest im wesentlichen zylindrische Form aufweist, wobei insbesondere die optischen Formkörper (4, 9; 5, 10) jeweils eine im wesentlichen halbkreisförmige, sich senkrecht zum Flächenelement (1) erstreckende Abschlußfläche (6, 7) aufweisen, die gemeinsam eine im wesentlichen kreisrunde Stirnseite der Sensoranordnung bilden, durch die Licht in die Sensoranordnung ein- und austritt.

7. Opto-elektronische Sensoranordnung mit einem Lichtsender (22) und einem Lichtempfänger (23),
dadurch **gekennzeichnet,**
daß der Sender (22) gemeinsam mit einer ihm zugeordneten Sendeoptik (28) und/oder einem ihm zugeordneten Sendetubus (24) und der Empfänger (23) gemeinsam mit einer ihm zugeordneten Empfangsoptik (29) und/oder einem ihm zugeordneten Empfangstubus (25) voneinander beabstandet auf der gleichen Seite eines Flächenelements (1), insbesondere einer Platine angeordnet sind, wobei Sende- und Empfangsoptik (28, 29) bzw. Sendetubus (24) und Empfangstubus (25) durch optische Formkörper gebildet sind, die durch optisch dichte Kunststoffmasse (26) optisch voneinander getrennt sind.

8. Opto-elektronische Sensoranordnung nach Anspruch 7,
dadurch **gekennzeichnet,**
daß Sende- und Empfangstubus (24, 25) und/oder Sende- und Empfangsoptik (28, 29) als optische Formkörper gemäß Anspruch 5 ausgebildet sind, und/oder daß die gehäusebildende Kunststoffmasse (26) gemäß Anspruch 6 ausgebildet ist, und/oder daß das Flächenelement (1), der Sender (22), der Empfänger (23), der Sendetubus (24) und der Empfangstubus (25) mit optisch dichter, gehäusebildender Kunststoffmasse (26) umhüllt sind, wobei insbesondere auf Sende- und/oder Empfangstubus (24, 25) eine Sende- bzw. Empfangsoptik (28, 29) aufgesetzt ist.

9. Opto-elektronische Sensoranordnung nach einem der Ansprüche 7 oder 8,
dadurch **gekennzeichnet,**
daß Sendetubus (24) und Sendeoptik (28) zu einem einheitlichen optischen Formkörper zusammengefaßt sind, und/oder daß Empfangstubus (25) und Empfangsoptik (29) zu einem einheitlichen optischen Formkörper zusammengefaßt sind.

10. Opto-elektronische Sensoranordnung mit einem Lichtsender (31) und einem Lichtempfänger (32),
dadurch **gekennzeichnet,**
daß der Sender (31), eine ihm zugeordnete Sendeoptik (33), der Empfänger (32) sowie eine ihm zugeordnete Empfangsoptik (34) auf einem im wesentlichen optisch undurchlässigen Flächenelement (30), insbesondere einer Platine angeordnet sind, wobei Sende- und Empfangsoptik (33, 34) jeweils einen mit dem Flächenelement (30) verbundenen, auf seiner Außenseite zumindest bereichsweise verspiegelten optischen Formkörper (33, 34) umfassen, und wobei Sender (31) und Sendeoptik (33) auf einander gegenüberliegenden Seiten des zwischen Sender (31) und Sendeoptik (33) optisch durchlässigen Flächenelements (30) angeordnet sind, und/oder wobei Empfänger (32) und Empfangsoptik (34) auf einander gegenüberliegenden Seiten des zwischen Empfänger (32) und Empfangsoptik (34) optisch durchlässigen Flächenelements (30) angeordnet sind.

11. Opto-elektronische Sensoranordnung nach Anspruch 10,
**gekennzeichnet** durch die Merkmale eines oder mehrerer der Ansprüche 2 bis 6.

12. Opto-elektronische Sensoranordnung nach einem der Ansprüche 10 oder 11,
dadurch **gekennzeichnet,**
daß Sender (31) und/oder Empfänger (32) mittels Flip-Chip-Technik mit elektrischen Leiterbahnen des Flächenelements (30) verbunden sind.
